# DEMANDE DE BREVET EUROPEEN

(11) **EP 2 498 027 A1**
(43) Date de publication de la demande: **12.09.2012**
(21) Numéro de dépôt: 11290120.2
(22) Date de dépôt: 09.03.2011
(51) Int. Cl.: F25B 39/04, F28D 7/00, F28D 7/02, F28F 1/02

(54) **Un condenseur pour une pompe à chaleur air/eau à accumulation de strates d'eau chaude**

(71) Demandeur: Lucas, Jérome, 40320 Bahus Souvbiran (FR)
(72) Inventeur: Lucas, Jérome, 40320 Bahus Souvbiran (FR)

(57) **Abrégé**

L'invention consiste en un ballon (18) de deux cents litres minimum de liquide traversé par des serpentins (1) (2) en métal. Un tube (3) amène le fluide caloporteur sous forme gazeuse du compresseur dans la partie supérieure du ballon. Le serpentin se développe verticalement au milieu du ballon et se divise en deux parties (2) dans sa zone basse. Il renvoie le fluide caloporteur (4) sous forme liquide, à la température du liquide de la partie basse (17) du ballon. La position des entrées et sorties sur le ballon permettent le mélange et la distribution de liquide pour des installations de chauffe.
La forme du condenseur et la colonne de liquide du ballon permettent la construction d'une unité de chauffe simple et performante, acceptant des pressions et des températures élevées du fluide caloporteur à la sortie du compresseur.

## Description

L'invention est conçue pour le transfert des calories d'un gaz chaud lors de sa condensation dans un conduit traversant une colonne de liquide. Sa conception permet d'accepter et de gérer les pressions et les températures plus élevées des nouveaux fluides caloporteurs imposés par les nouvelles normes mondiales de l'environnement. Sa première utilisation est pour une pompe à chaleur Air Eau à accumulation de strates d'eau chaude, de conception simple, de fabrication et d'utilisation économique. Elle est permet s'adapter aux installations existantes de chauffage central et utilisable en relevage de chaudières à combustible fossile.

Les pompes à chaleur Air Eau, produisent en fonction des besoins en chauffage. Il en découle cinq problèmes majeurs.
- Premier problème : Les variations de demande en chauffage augmentent les fréquences de fonctionnement de la pompe à chaleur. Les variations de pression du fluide caloporteur n'autorisent pas des arrêts et des redémarrages fréquents du compresseur. Pour gérer les variations de la demande, les compresseurs sont équipés de moteur à vitesse variable. Des circuits électriques importants sont nécessaires pour la régulation et les protections du moteur du compresseur, d'une part, ils représentent une part non négligeable de la consommation annuelle des pompes à chaleur, d'autres parts, ils sont sensibles à la foudre et en fonctionnement aux coupures intempestives de courant du réseau électrique. La consommation en veille est équivalente à 3% de la consommation de la pompe à chaleur durant la période de chauffage.
- Deuxième problème : Dans les condenseurs, la quantité d'eau est limitée pour les rendre très réactif. Ils sont principalement constitués par des échangeurs à plaques ou des ballons de faible contenance qui présentent une grande surface d'échange thermique dans un petit volume.
   Dans tous les échangeurs, les faibles masses d'eau nécessitent des précautions rigoureuses contre la présence d'air, de sable, de boues et de retour d'eau chaude. Malgré la présence de circuits de contrôle, toute anomalie dans les fluides perturbe l'échange thermique avec des risques de surchauffe qui peuvent provoquer de graves dommages au condenseur.
- Troisième problème : La faible distance entre les points chauds et les points froids du condenseur rend très difficile la production d'eau chaude supérieure à soixante degrés Celsius. De plus une association avec une chaudière à énergie fossile s'avère délicate. En effet, la température de retour du fluide caloporteur ne doit pas dépasser les cinquante cinq degrés Celsius au risque d'un retour de gaz trop chaud vers le compresseur. Les gaz en sortie du compresseur entrent en zone critique de pression et de température avec pour conséquence des risques de détérioration de la pompe à chaleur.
- Quatrième problème : La faible masse d'eau des condenseurs limite l'utilisation de pressions élevées qui engendrent des températures trop élevées pour la restitution des calories.
- Cinquième problème : Des contradictions apparaissent par grand froid. La demande en chauffage augmente, alors que les possibilités de la pompe à chaleur à récupérer des calories diminuent. La surpuissance demandée au compresseur entraîne un retour de forte masse de fluide sur l'évaporateur, déjà en baisse d'échange thermique à cause des faibles températures de l'air extérieur. Cette masse supplémentaire provoque une inertie importante de l'évaporateur. Elle aggrave la formation de givre sur celui-ci.

Les solutions consistent, d'une part, par un apport de résistances électriques chauffantes pour les périodes de grand froid, alors que la capacité des réseaux de distributions d'électricité est au maximum. D'autres parts, des circuits d'eau indépendants avec une bouteille d'échange sont nécessaires pour s'adapter aux installations existantes de chauffage. Ils nécessitent une gestion plus complexe du chauffage.

Pour toutes ces raisons, les pompes à chaleur se limitent principalement aux planchers chauffants des maisons neuves bien isolées.

L'invention consiste à un condenseur constitué par un ballon vertical de liquide, dans lequel le fluide caloporteur circule à travers des serpentins.

L'invention commence par un tuyau isolé (3), transportant le fluide caloporteur du compresseur (25) sous forme gazeuse. Il entre dans la partie supérieure du ballon (18) de liquide (15), d'une contenance minimum de deux cents litres. La puissance du compresseur, la taille du condenseur et le volume de liquide du ballon sont déterminés par la demande en température et en quantité de liquide. Le tuyau se développe en forme de serpentin vertical (1) qui tourne vers le bas au milieu de la colonne de liquide. Il se divise en deux parties (2) dans sa zone basse. La première partie (1) est composée d'un tube ovalisé de section supérieure aux sections des tubes de la deuxième partie du serpentin (2). Le fluide caloporteur se condense dans le serpentin (1) (21). Il s'écoule vers le bas aidé par la pesanteur. La colonne de liquide au milieu du ballon effectue un échange thermique à contre courant naturel. Des petites boucles de liquide (24) en strates sur les serpentins (1) (2) favorisent la circulation et l'échange thermique. La sortie des parties inférieures du serpentin est située dans la partie basse (17) du ballon de liquide. Le serpentin renvoie le fluide caloporteur (4) sous forme liquide à la température du liquide en partie basse du ballon. Les calories s'accumulent par stratification thermique du liquide du ballon. Le liquide plus chaud s'accumule dans la partie supérieure du ballon où se trouvent la sortie du liquide chaud (6) et une entrée (9) pour un apport d'une autre source de liquide chaud. Dans sa partie inférieure se situent le retour (7) du liquide distribué et une sortie (8) vers la possibilité d'autres sources de liquide rapporté. La position des entrées et des sorties sur le ballon permet le mélange et la distribution du liquide. Dans la partie basse du ballon une sonde de température (5) va nous permettre de gérer la demande de fonctionnement de la pompe à chaleur. La sécurité est assurée par un purgeur de gaz (12) positionné sur la partie la plus haute du ballon, un capteur (11) de présence de liquide, une sonde de température (10) en partie haute et le fond du ballon (14) servant de récupération des sables et des boues contenus dans le liquide avec un bouchon (13) de vidange. L'ensemble de l'invention est recouvert d'isolant thermique (16).

Dans l'invention, la masse de la colonne de liquide du ballon, la position et la forme verticale du condenseur apportent les solutions aux problèmes posés
- La solution au premier problème : Le fonctionnement du condenseur à accumulation n'est pas dépendant de la demande en chauffage. En conséquence, un compresseur équipé avec un moteur asynchrone à vitesse stable dépendant de la fréquence secteur suffit. Son couple moteur et sa demande en courant électrique progressent en fonction de la température de retour du fluide caloriporteur (35).La commande du moteur du compresseur est simple. Un relais piloté par le module de gestion suffit.
- La solution au deuxième problème : Le nouveau condenseur permet une très grande efficacité de l'échange de chaleur,grâce à une circulation des 2 fluides parfaitement à contre courant dans une colonne d'eau importante, avec une neutralisation automatique de l'air, des boues et des sables parasites. Les calories s'accumulent par stratification thermique du liquide.
- La solution au troisième problème : La distance du point chaud au point froid du système diphasique des serpentins est grande. L'entrée haute et la sortie basse des serpentins permettent au ballon une production d'eau très chaude avec une récupération maximum des calories. En sortie (17) du condenseur, la température du fluide caloriporteur est à la même température du liquide en partie basse du ballon. Elle aide au bon fonctionnement du détendeur. Elle permet d'optimiser le rendement de l'évaporateur (37).Elle évitent le risque de retour de gaz trop chaud vers le compresseur. Elle protège le compresseur des surchauffes et évite les entrées en zone critique, du gaz en sortie de compresseur.
- La solution au quatrième problème : La colonne de liquide d'au moins 200 litres permet sont réchauffement par stratification .Elle offre la possibilité d'absorbée la température de surpression intempestive dans la partie supérieure (1) du serpentin, le ruissellement du condensat et son écoulement aidé par la pesanteur dans la partie basse de la section ovalisée (21) permet à la chaleur latente du changement d'état du fluide caloporteur de convecter plus rapidement. La masse d'eau favorise l'absorption des températures élevées, des pressions et des vibrations générées par le compresseur. De plus la progression régulière de la masse thermique du fluide caloporteur dans les serpentins est propice au bon déroulement de la boucle diphasique. Elle permet une accumulation par stratification thermique du liquide du ballon, avec une récupération maximum des calories.
- La solution au cinquième problème : La position des entrées et sorties sur le ballon permettent le rajout d'eau chaude par d'autres systèmes de production sans risque de perturbations pour le condenseur, mais aussi pour la pompe à chaleur.

Les dessins annexés illustrent l'invention :

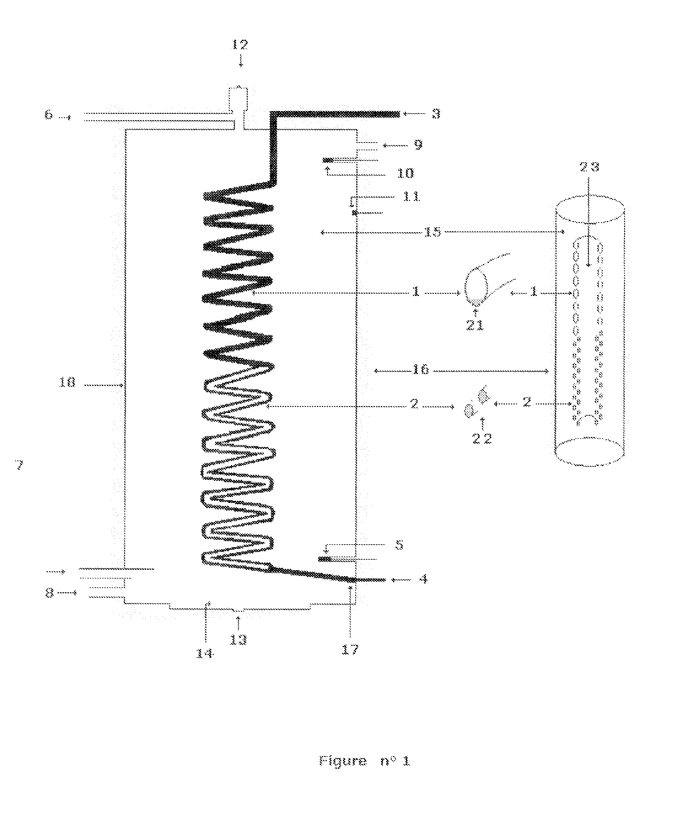

La figure n° 1 représente le condenseur en coupe

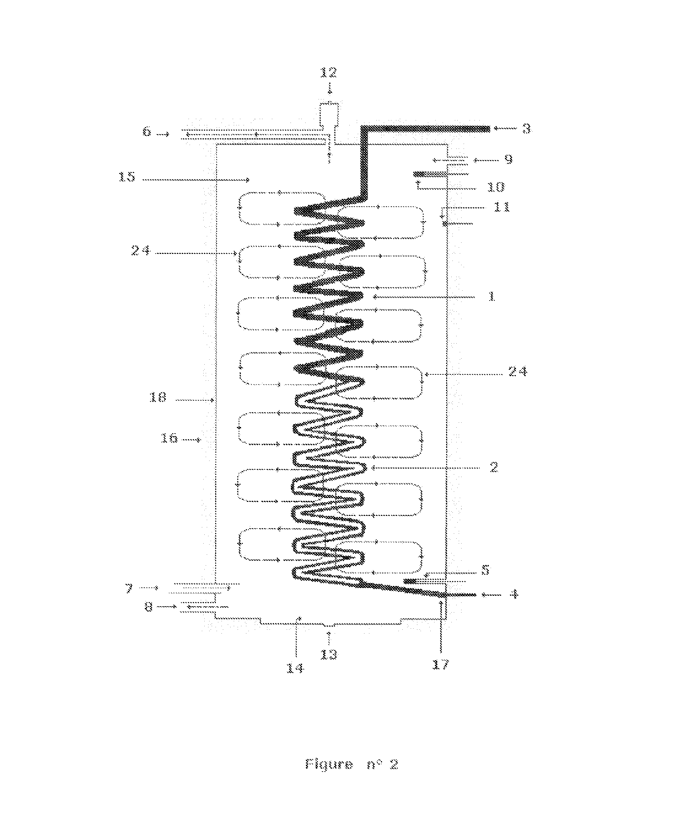

La figure n° 2 représente la circulation de l'eau dans le condenseur en coupe

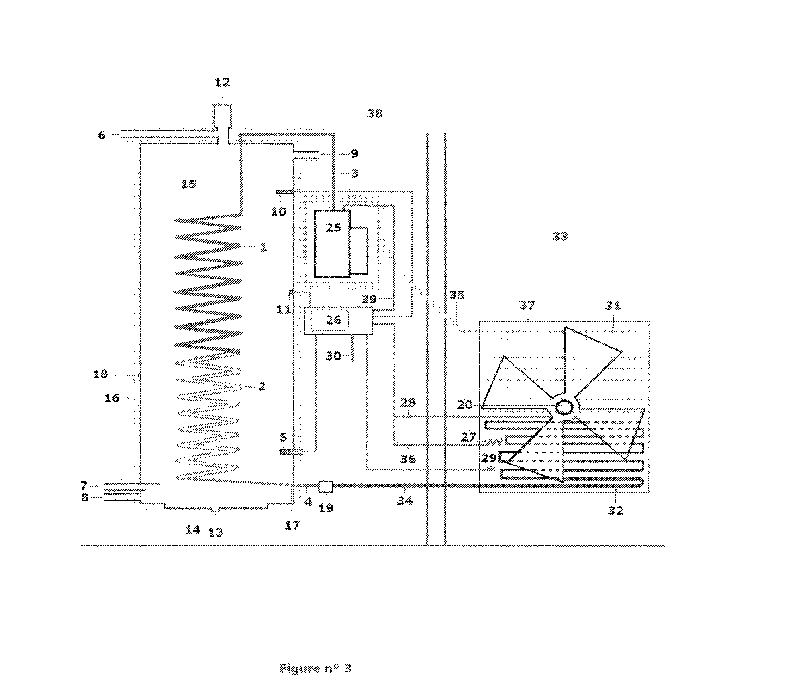

La figure n° 3 représente une unité de production d'eau chaude par la pompe à chaleur et le mélange avec une autre source de chaleur.

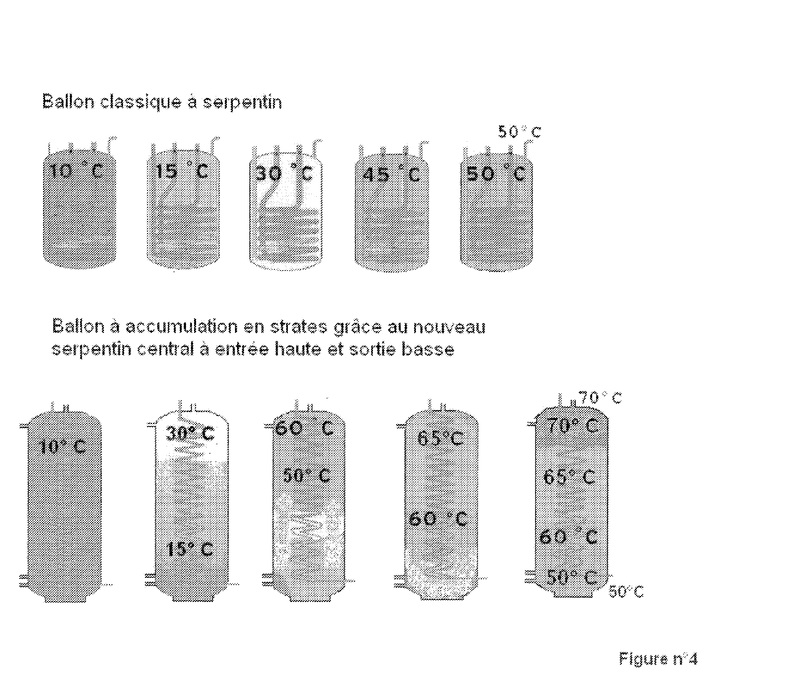

La figure n° 4 représente les avantages du chauffage par stratification.

Pour le chauffage, l'invention est utilisable avec la chaudière à énergie fossile de l'habitat existant. Avec cette autre source d'eau chaude, elle peut gérer les périodes de grand froid et les heures de pointe en fourniture d'électricité. Elle peut être couplée à un chauffage solaire.

L'alimentation (3) en gaz du serpentin s'effectue par un compresseur (25) près du ballon (18) dans un caisson insonorisé (38) et isolé pour éviter les pertes de charge et de température. La sortie du condenseur (4) est reliée au détendeur (19) avec une liaison basse pression (34) vers l'évaporateur (37). Un ventilateur (20) fait circuler l'air de l'extérieur (33) sur les circuits (31) à (32) de l'évaporateur, qui renvoie le fluide caloporteur par une liaison basse pression (35) au compresseur. Un module de commande (26) gère le fonctionnement de l'unité de production. Il reçoit l'alimentation électrique (30), il commande l'alimentation (39) du compresseur et l'alimentation (28) du ventilateur (20) de l'évaporateur. Dans l'évaporateur se trouve une sonde de température (29) et une résistance électrique (27) alimentée (36) par le module de commande pour le dégivrage. L'entrée (9) et la sortie (8) servent pour un apport d'eau chaude par une autre source de chaleur en période de grand froid. La sortie (6) et le retour (7) alimentent les différentes demandes de chauffages. Chaque demande ayant sa propre régulation en fonction de ses besoins.

La mise en service de l'unité est facile. Son faible bruit permet une unité en bloc compact ou simplement avec l'évaporateur en extérieur et des liaisons uniquement basse pression et en simple isolation à rajouter. L'invention va permettre un fonctionnement souple et économique. La simplicité de l'unité facilite l'utilisation des régulations et des sécurités.

L'expérimentation sur une installation de chauffage couplée, avec une chaudière gaz et la contrainte d'un tarif EDF EJP donne les résultats escomptés. Les mesures effectuées en situation réelle durant ces trois derniers hivers, permettent de diviser par trois la facture énergétique et de financer l'installation en quelques années. La production de gaz polluants est divisée par quatre.

L'invention amène des économies d'énergie fossile, une diminution de la pollution, une gestion plus facile de la distribution des énergies.

Dans le contexte économique et politique actuel, La fabrication d'unités de pompe à chaleur air eau grand public doit intéresser les industriels par sa simplicité et sa fiabilisation,les consommateurs pour les économies réalisées, la communauté pour la régulation des énergies et la diminution des gaz polluants

L'évolution industrielle de ce concept doit déboucher la fabrication de condenseurs pour des unités de puissance pour le chauffage collectif Dans l'industrie, la conception du condenseur va permettrent l'utilisation des pressions et des températures élevées des nouveaux gaz caloporteurs pour produire des liquides pressurisés à haute température. La chaleur perdue pendant et après l'utilisation du liquide peut être récupéré par l'évaporateur, augmentant les performances de la pompe à chaleur.

## Revendications

1. Condenseur pour le transfert thermique des changements d'état de fluide dans une pompe à chaleur comprenant un ballon vertical, (18) isolé (16) ,de forme cylindrique plus haut que large contenant une colonne de liquide (15) au minimum de deux cents litres, un tuyau en métal isolé (3) transportant le fluide caloporteur sous forme gazeuse du compresseur (25) entrant dans la partie supérieure du ballon, se développant en forme de tube (23) au milieu du ballon par un serpentin vertical (1) et se divisant en deux parties (2) dans sa zone basse, la sortie du serpentin s'effectuant par la partie (17) basse du ballon, des entrées (7) (9) et sorties (6) (8) permettant l'apport d'une source extérieure de liquide chaud et la distribution pour les besoins.

2. Le condenseur selon la revendication 1 est **caractérisé en ce que** la la première partie du serpentin (1 ) est composé d'un tuyau ovalisé (21), descendant au milieu de la zone supérieure d'une colonne de liquide, les gaz à haute pression et haute température du fluide caloporteur reçus du compresseur se condensant sur les parois du tuyau, les gouttelettes se formant sur les parois, glissant vers le bas de la section du tuyau (21), s'écoulant vers le bas du serpentin aidé par l'effet de la pesanteur, libérant la section supérieure du tuyau sur la longueur de la première partie de serpentin (1), permettant la condensation sur les parois de sa longueur et la séparation entre le gaz et le liquide caloporteur.

3. Le condenseur selon la revendication 2 est **caractérisé en ce que** la deuxième partie du serpentin (2) est composés de deux tuyaux ovalisés (22) de section inférieure à la première partie du serpentin, descendant dans la deuxième partie de la colonne de liquide, permettant la collecte du fluide caloporteur sous forme liquide, facilitant la retenue des gaz dans la première partie du serpentin, ramenant progressivement la température du liquide caloporteur à celles de la colonne de liquide dans la partie basse du ballon.

4. Le condenseur selon la revendication 1 est **caractérisé en ce que** la première partie (1) du serpentin descend dans une colonne de liquide (15) d'un minimum de deux cents litres permettant l'utilisation des températures élevées générées par les pressions importantes dans l'utilisation des nouveaux gaz caloporteurs imposés par les nouvelles normes mondiales de l'environnement, en absorbant les températures élevées, en amortissant les vibrations arrivant du compresseur, en facilitant les prises de mesures et en laissant du temps à la réaction des éléments de sécurité.

5. Le condenseur selon la revendication 1 est **caractérisé en ce que** la hauteur de la colonne (15) de liquide, le serpentin en forme de tube (23) au milieu de cette colonne de liquide avec une distance maximum du point chaud au point froid du système diphasique des serpentins, permettant la formation de volute de liquide chaud autour du serpentin, un transfert thermique progressif sur la hauteur de la colonne (15) et une circulation naturelle des fluides à contre courant, permettant l'accumulation de liquide chaud en strates. La hauteur de la colonne définit la température de sortie du liquide par rapport à la température de sortie du fluide caloporteur étant à la température du bas de la colonne de liquide, permettant de gérer dans de bonne condition le fonctionnement de la boucle diphasique du fluide caloporteur et le risque d'entrée en zone critique des gaz en sortie du compresseur.

6. Le condenseur selon la revendication 1 est **caractérisé en ce que** la longueur des serpentins (1) (2) définissant la capacité du compresseur, la hauteur et le volume de la colonne de liquide pour les besoins en liquide chaud

7. Le condenseur selon la revendication 1 est **caractérisé en ce que** la forme verticale de la colonne de liquide (15) avec sa masse de liquide supérieur à haute température et sa masse de liquide inférieur à basse température permettant un mélange des liquides d'apport sans risques pour la sécurité du condenseur et de la pompe à chaleur.

## Revendications modifiées

### Revendications modifiées conformément à la règle 137(2) CBE.

**1.** Condenseur pour le transfert thermique des changements d'état d'un fluide caloporteur, le dit condenseur comprenant un ballon isolé (16) d'une contenance au minimum de cent litres, de forme cylindrique plus haut que large, remplit de liquide (15) avec au centre du ballon un serpentin vertical ayant un diamètre inférieur ou égal à la moitié du diamètre intérieur du ballon. Un tuyau (3) en métal, isolé jusqu'à l'entrée du ballon apportant un fluide caloporteur sous forme gazeuse, pouvant provenir d'un compresseur, entrant dans le condenseur par la partie supérieure du ballon sous forme coaxiale (40) au milieu de la sortie du liquide, se développant avec un tube de forme ovalisé (21) par un serpentin, composé d'une première partie (1) dans la zone haute du ballon, se divisant dans sa zone basse en deux parties (2a) (2b), la section du tube ovalisé (21) de la première partie (1) du serpentin étant supérieure à la section des tubes ovalisés (22) des parties suivantes(2a) (2b) du serpentin. Le fluide caloporteur sous forme liquide sortant du condenseur par un tube (4) sous forme coaxiale (41) au milieu de l'entrée du liquide dans la partie basse du ballon (17).

**2.** Le condenseur selon la revendication 1 est **caractérisé en ce que** la hauteur des sections des tuyaux ovalisés, étant supérieure à deux fois leur largeur.

**3.** Le condenseur selon la revendication 1 est **caractérisé en ce que** La deuxième partie de serpentin (2a) étant soudé dans la continuité de la première partie du serpentin(1), la troisième partie de serpentin (2b) étant soudé en repiquage, les deuxième et troisième parties de serpentin (2a) (2b) se rejoignant dans la partie basse du ballon.la sortie du fluide se faisant par repiquage avec un tuyau de section inférieure à la section du tuyau entrant dans le condenseur.

**4.** Le condenseur selon la revendication 1 est **caractérisé en ce que** l'entrée du fluide caloporteur dans le condenseur, s'effectuant avec la sortie du liquide en partie supérieure (18) du ballon dans des tubes coaxiaux (40),le fluide caloporteur (3) entrant dans le tube interne et le liquide sortant dans le tube externe sur une sortie (6).

**5.** Le condenseur selon la revendication 1 est **caractérisé en ce que** la sortie du fluide caloporteur du condenseur, s'effectuant avec l'entrée du liquide en partie basse du ballon (17) dans des tubes coaxiaux (41), le fluide caloporteur sortant dans le tube interne (4) et le liquide entrant dans le tube externe sur une entrée (7).

**6.** Le condenseur selon la revendication 1 est **caractérisé en ce que** les tubes coaxiaux (41) de sortie du ballon se prolongeant jusqu'au détendeur (19).

**7.** Le condenseur selon la revendication 1 est **caractérisé en ce qu'**une embase (42) se posant sur la partie supérieure du ballon avec un joint d'étanchéité. Cette embase recevant les tubes coaxiaux supérieurs. Le serpentin étant solidaire de cette embase par un tube vertical (13) soudé le long du serpentin, fermé à son extrémité basse, son extrémité supérieure soudée à l'embase, ouvrant à l'extérieur du ballon pour l'introduction de sondes de mesure.

**8.** Le condenseur selon la revendication 1 est **caractérisé en ce que** des branchements en haut (9), au milieu (8a) (9a) et en bas (8) du ballon permettant des sorties et des entrées à différents niveaux du liquide.
